# EUROPÄISCHE PATENTSCHRIFT

(11) **EP 2 502 331 B1**
(45) Veröffentlichungstag und Bekanntmachung des Hinweises auf die Patenterteilung: **11.12.2019**
(21) Anmeldenummer: 10760733.5
(22) Anmeldetag: 07.10.2010
(51) Int. Cl.: H02K 1/27, H02K 1/28

(54) **ROTOR FÜR EINE ELEKTRISCHE MASCHINE**
ROTOR FOR AN ELECTRICAL MOTOR
ROTOR POUR MOTEUR ÉLECTRIQUE

(30) Priorität: 16.11.2009 DE 102009046716
(43) Veröffentlichungstag der Anmeldung: 26.09.2012
(73) Patentinhaber: Robert Bosch GmbH, 70442 Stuttgart (DE)
(72) Erfinder: REUTLINGER, Kurt, 70174 Stuttgart (DE)
(86) Internationale Anmeldenummer: PCT/EP2010/064961
(87) Internationale Veröffentlichungsnummer: WO 2011/057869

(56) Entgegenhaltungen:
- EP-A1- 1 921 734
- EP-A2- 1 309 066
- WO-A2-99/17420
- JP-A- 2001 157 394

## Beschreibung

### Stand der Technik

Die Erfindung betrifft einen Rotor für eine elektrische Maschine mit einem Lamellenkörper, der mehrere Magnetaufnahmen aufweist, und mehreren Magneten, die in den Magnetaufnahmen des Lamellenkörpers angeordnet sind.

Aus der EP 1 309 066 A2 ist ein Rotor für eine Synchronmaschine bekannt. Hierbei sind Stanzbleche für den Rotor vorgesehen, die einfach gestaltet sind und dabei gleichzeitig einen verringerten Streufluss über die Welle aufweisen. Hierbei sind in dem Stanzblech eine Vielzahl an in Umfangsrichtung angeordneten Aussparungen vorgesehen, in die jeweils zwei Permanentmagnete einführbar sind und in denen zwischen den Permanentmagneten jeweils ein in Form eines freien Polelements angeordnet ist. Die Aussparungen sind dabei derart geformt, dass bei radial nach außen in der jeweiligen Aussparung anliegend eingesetzten Permanentmagneten ein Luftspalt zwischen der radial zum Zentrum weisenden Fläche des Zwischenblechsegments und einer radial vom Zentrum nach außen weisenden Kante der Aussparung besteht. Der Luftspalt gewährt dabei die notwendige Dämpfung des Streuflusses.

In der EP 1 309 066 A2 sind verschiedene Varianten zur Ausgestaltung des Rotorblechs beschrieben. In der Fig. 1 der EP 1 309 066 A2 ist ein Rotorblech gezeigt, das nur einen Teil des Streupfades für den Magnetfluss der Permanentmagnete eliminiert. Hierbei verbleibt durch die Verbindung ein wesentlicher Streupfad für den Magnetfluss. Außerdem ist die Stabilität des Rotors gering, da die vollen Fliehkräfte der Magnete und der Polbleche durch dünne Stege gehalten werden müssen. Die Stege werden zudem durch die Fliehkraft auf Biegung belastet, was bereits bei geringer Belastung zu einem Ausbeulen der Polbleche führt. Diese treten in Richtung Luftspalt aus und können am Ständer streifen.

Auch bei der in der Fig. 2 der EP 1 309 066 A2 gezeigten Ausgestaltung ergeben sich Nachteile. Bei dieser Ausgestaltung werden die losen Polbleche durch formschlüssige Klammern an den Rotor angebunden. Diese Klammern müssen die vollen Fliehkräfte der Magnete und der Polbleche halten. Dies führt zu einer filigranen, wenig stabilen Konstruktion, die einen hohen Fertigungsaufwand erfordert, da viele Teile gefügt werden müssen.

Nachteile ergeben sich auch bei der aus der Fig. 3 der EP 1 309 066 A2 bekannten Ausgestaltung. Bei dieser Ausgestaltung tragen die Magnete selbst die Fliehkräfte der Polblechpakete, was vorteilhaft ist. Die Fliehkräfte der Polbleche werden über die Nasen an die Magnete übertragen. Die Magnete selbst stützen sich dann wiederum an Nasen der Rotorbleche ab. Hierdurch werden die Magnete selbst für die mechanische Festigkeit des Rotors genutzt und es sind keine weiteren Befestigungselemente erforderlich. Keramische oder gesinterte Magnete besitzen mechanisch nur eine geringe Festigkeit gegen Zug, hier wird der Magnet jedoch im Wesentlichen auf Druck beansprucht. Nachteilig bei dieser Anordnung ist, dass die Blechpakete und die Magnete mit sehr engen Toleranzen hergestellt werden müssen. Toleranzen zwischen Magnet und Blechpaketen führen zu einer lockeren Verbindung und können zu ungleichem Sitz der Polblechpakete im Rotor führen. Daher müssen die Magnete für diese Anordnung sehr genau geschliffen werden, was die Kosten für die Magnete und somit die Herstellung des Rotors deutlich erhöht.

### Offenbarung der Erfindung

Der erfindungsgemäße Rotor mit den Merkmalen des Anspruchs 1 und die erfindungsgemäße elektrische Maschine mit den Merkmalen des Anspruchs 9 haben demgegenüber den Vorteil, dass die Ausgestaltung des Rotors optimiert ist. Speziell ist eine kostengünstige Fertigung des Rotors möglich.

Durch die in den Unteransprüchen aufgeführten Maßnahmen sind vorteilhafte Weiterbildungen des im Anspruch 1 angegebenen Rotors angegeben.

Vorteilhaft ist es, dass die Füllmasse zum Auffüllen der Hohlräume in die Hohlräume eingespritzt ist. Hierbei kann die Füllmasse in vorteilhafter Weise auf zumindest einem Kunststoff basieren. Durch den Kunststoff können hierbei eine oder mehrere Funktionen gewährleistet werden. Insbesondere kann ein Toleranzausgleich, ein Korrosionsschutz und/oder eine Versteifung des Rotors erzielt werden. Hierbei können die einzelnen Lamellen des Lamellenkörpers in vorteilhafter Weise zusammengehalten und stabilisiert werden.

Vorteilhaft ist es auch, dass die Füllmasse auf einem hochfesten Kunststoff basiert. Ferner ist es vorteilhaft, dass die Füllmasse zumindest eine Glasbeimengung oder eine andere, die Festigkeit des Kunststoffs erhöhende Beimengung aufweist. Hierdurch kann eine hohe Stabilität auch bei großen Kräften, insbesondere bei hohen Drehzahlen, erzielt werden.

Erfindungsgemäss hat der Lamellenkörper einen innenliegenden Befestigungsbereich, an dem der Rotor zumindest mittelbar mit einer Welle verbindbar ist, und dass zwischen dem innenliegenden Befestigungsbereich und zumindest einem Magneten ein innenliegender Hohlraum ausgebildet ist, der zumindest im Wesentlichen mit der Füllmasse aufgefüllt ist. Hierbei ist erfindungsgemäss vorgesehen, dass an den innenliegenden Hohlraum zwei Magnetaufnahmen angrenzen, in denen jeweils ein Magnet angeordnet ist, und dass die Magnetaufnahmen durch ein freies Polelement des Lamellenkörpers voneinander beabstandet sind. Hierdurch wird ein magnetischer Streufluss in vorteilhafter Weise verringert.

Ferner ist es hierbei vorteilhaft, dass das freie Polelement innenliegende Absätze aufweist, die die Magnete innen hintergreifen. Hierdurch stützt sich das freie Polelement im Bezug auf die beim Rotieren des Rotors auftretenden Fliehkräfte an den Magneten ab. Hierdurch wird der Rotor formschlüssig zusammengehalten, wobei die Magnete zumindest im Wesentlichen auf Druck belastet werden.

Zusätzlich oder alternativ ist es hierbei auch von Vorteil, dass das freie Polelement eine an den innenliegenden Hohlraum angrenzende Aussparung aufweist und dass die Aussparung des freien Polelements zumindest im Wesentlichen mit der Füllmasse aufgefüllt ist. Die beispielsweise durch Einspritzen eingebrachte Füllmasse befindet sich dann sowohl in dem Hohlraum als auch in der Aussparung des Polelements. Somit wird das freie Polelement über die Füllmasse fixiert und in radialer Richtung gehalten. Auftretende Fliehkräfte werden dann zumindest teilweise über die Füllmasse aufgenommen. Dadurch ist eine hohe Stabilität gewährleistet.

Hierbei ist es ferner vorteilhaft, dass der innenliegende Befestigungsbereich eine an den innenliegenden Hohlraum angrenzende Aussparung aufweist und dass die Aussparung des innenliegenden Befestigungsbereichs zumindest im Wesentlichen mit der Füllmasse aufgefüllt ist. Hierdurch kann die Verbindung zwischen der Füllmasse und dem Befestigungsbereich verbessert werden, wobei insbesondere eine formschlüssige Verbindung gebildet werden kann. Hierdurch können auftretende Fliehkräfte, die auf die Füllmasse und gegebenenfalls auf ein freies Polelement wirken, in vorteilhafter Weise über die Füllmasse von dem Befestigungsbereich aufgenommen werden. Hierdurch ist die Stabilität weiter verbessert.

Erfindungsgemäss ist vorgesehen, dass zwischen dem Lamellenkörper und den Magneten verbleibende Spalte zumindest teilweise mit der Füllmasse aufgefüllt sind. Es ist vorteilhaft dass die Magnete an einem außenliegenden Bereich zumindest teilweise von der Füllmasse umgeben sind. Hierdurch können vorgesehene Spalte in vorteilhafter Weise aufgefüllt werden, um die Magnete und gegebenenfalls freie Polelemente mit den übrigen Lamellenteilen in vorteilhafter Weise zusammenzuhalten. Dadurch werden Toleranzen ausgeglichen und lockere Verbindungen innerhalb des Rotors verhindert. Hierdurch ist es auch möglich, dass die Toleranzen im Hinblick auf eine einfache Fertigung weniger eng festgelegt sind, so dass sich beispielsweise die Herstellung der Magnete vereinfacht. Hierdurch können die Kosten der Herstellung reduziert werden.

### Kurze Beschreibung der Zeichnungen

Bevorzugte Ausführungsbeispiele der Erfindung sind in der nachfolgenden Beschreibung anhand der beigefügten Zeichnungen, in denen sich entsprechende Elemente mit übereinstimmenden Bezugszeichen versehen sind, näher erläutert. Es zeigt:
Fig. 1 eine elektrische Maschine mit einem Rotor in einer schematischen Darstellung entsprechend einem ersten Ausführungsbeispiel der Erfindung;
Fig. 2 einen Rotor der in Fig. 1 dargestellten elektrischen Maschine entsprechend einem zweiten Ausführungsbeispiel dass jedoch nicht Teil der Erfindung ist und
Fig. 3 den in Fig. 1 mit III bezeichneten Ausschnitt eines Rotors einer elektrischen Maschine entsprechend einem dritten Ausführungsbeispiel der Erfindung.

### Ausführungsformen der Erfindung

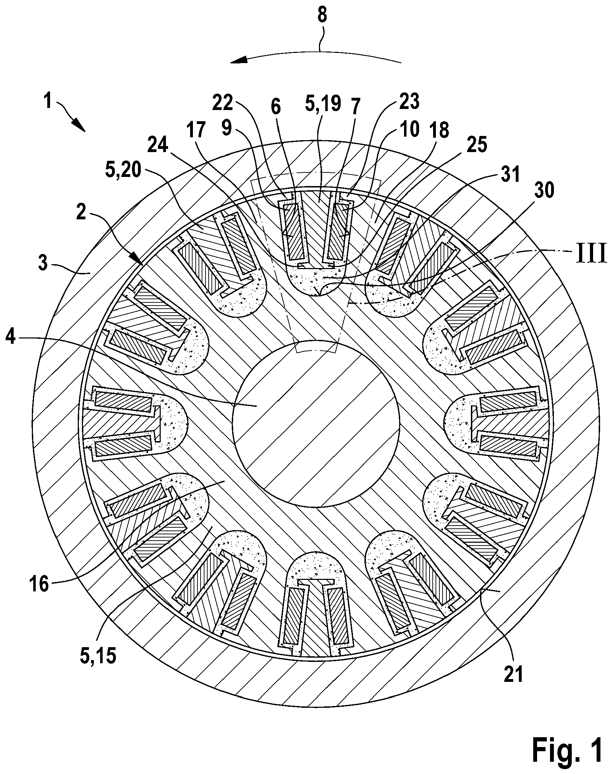

Fig. 1 zeigt eine elektrische Maschine 1 in einer auszugsweisen, schematischen Darstellung entsprechend einem ersten Ausführungsbeispiel. Die elektrische Maschine 1 eignet sich insbesondere für Anwendungen in Kraftfahrzeugen, beispielsweise zur Lenkunterstützung. Speziell kann die elektrische Maschine 1 als PM-Synchronmaschine 1 ausgestaltet sein. Die elektrische Maschine 1 weist einen Rotor 2 und einen Stator 3 auf. Der Rotor 2 ist dabei innerhalb des Stators 3 angeordnet. Ferner ist der Rotor 2 auf geeignete Weise mit einer Welle 4 der elektrischen Maschine 1 verbunden.

Der Rotor 2 weist einen Lamellenkörper 5 auf, der aus einer Vielzahl von Blechlamellen gebildet ist. Hierbei können die Blechlamellen zum Ausbilden des Lamellenkörpers 5 in ein oder mehrere Lamellenpakete zusammengefasst sein. Der Lamellenkörper 5 weist mehrere Magnetaufnahmen 6, 7 auf. Hierbei sind in der Fig. 1 zur Vereinfachung der Darstellung nur die Magnetaufnahmen 6, 7 gekennzeichnet. Die Magnetaufnahmen 6, 7 sind in einer Umfangsrichtung 8 über den Lamellenkörper 5 verteilt angeordnet. Hierbei ist die Verteilung vorzugsweise gleichmäßig über den Umfang in Umfangsrichtung 8 vorgegeben, um im montierten Zustand ein symmetrisches Magnetfeld auszubilden.

In die Magnetaufnahmen 6, 7 sind Magnete 9, 10 eingefügt. Hierbei ist in diesem Ausführungsbeispiel für jede einzelne Magnetaufnahme 6, 7 ein Magnet 9, 10 vorgesehen. Je nach Ausgestaltung des Rotors 2 können allerdings auch einzelne Magnetaufnahmen 6, 7 frei bleiben.

Der Lamellenkörper 5 weist in diesem Ausführungsbeispiel einen Grundkörper 15 mit einem innenliegenden Befestigungsbereich 16 und einzelnen Streben 17, 18 auf, die sich in radialer Richtung erstrecken. Hierbei sind zur Vereinfachung der Darstellung nur die Streben 17, 18 gekennzeichnet. Außerdem weist der Lamellenkörper 5 freie Polelemente 19, 20 auf. Die freien Polelemente 19, 20 sind jeweils zwischen zwei benachbarten Streben 17, 18 angeordnet. Beispielsweise ist das freie Polelement 19 zwischen den Streben 17, 18 angeordnet. Die Magnetaufnahme 6 ist dadurch zwischen der Strebe 17 und dem freien Polelement 19 gebildet. Die Magnetaufnahme 7 ist zwischen der Strebe 18 und dem freien Polelement 19 gebildet. Somit sind die Magnetaufnahmen 6, 7 durch das freie Polelement 19 voneinander beabstandet. In entsprechender Weise sind auch die anderen Magnete durch freie Polelemente, beispielsweise das freie Polelement 20, voneinander beabstandet. Hierbei ergeben sich Bauteilgruppen, wobei beispielsweise durch das freie Polelement 19 und die Magnete 9, 10 eine Bauteilgruppe gebildet ist.

Die Streben 17, 18 sind an einer Außenseite 21 des Rotors 2 T-förmig ausgestaltet. Hierbei erstreckt sich eine Nase 22 der Strebe 17 entgegen der Umfangsrichtung 8 an der Außenseite 21 etwas in Richtung auf das freie Polelement 19. Durch die Nase 22 wird der Magnet 9 nach außen hin gehalten. Entsprechend ist an der Strebe 18 eine Nase 23 ausgebildet, die sich in der Umfangsrichtung 8 etwas in Richtung auf das freie Polelement 19 erstreckt. Hierdurch wird der Magnet 10 nach außen gehalten.

Außerdem weist das freie Polelement 19 innenliegende Absätze 24, 25 auf, die sich in beziehungsweise entgegen der Umfangsrichtung 8 erstrecken. Über die Absätze 24, 25 ist eine Abstützung des freien Polelements 19 an den Magneten 9, 10 in radialer Richtung gewährleistet.

Im Betrieb der elektrischen Maschine 1 rotiert die Welle 4 mit dem Lamellenkörper 5, der den Grundkörper 15 und die freien Polelemente 19, 20 umfasst, und den Magneten 9, 10. Hierbei treten Fliehkräfte auf. Die beispielsweise auf das freie Polelement 19 wirkende Fliehkraft wird über die Magnete 9, 10 aufgenommen. Ferner stützen sich die Magnete 9, 10 an den Nasen 22, 23 der Streben 17, 18 ab. Dadurch sind die Kräfte von dem freien Polelement 19 und den Magneten 9, 10 über die Streben 17, 18 abgestützt. Die Magnete 9, 10 werden hierbei im Wesentlichen auf Druck belastet. Somit kann das freie Polelement 19 über die innenliegenden Absätze 24, 25, die die Magnete 9, 10 innen hintergreifen, an den Streben 17, 18 in radialer Richtung abgestützt werden.

Zwischen dem Lamellenkörper 5 und den Magneten 9, 10 ist ein Hohlraum 30 gebildet, der mit einer Füllmasse 31 aufgefüllt ist. Entsprechend sind auch für die weiteren Magnete Hohlräume gebildet. Die Füllmasse 31 kann beispielsweise auf einem Kunststoff basieren. Speziell kann ein hochfester Kunststoff zum Einsatz kommen. Hierbei kann die Füllmasse 31 auch Beimengungen aufweisen, insbesondere können Beimengungen aus Glas vorgesehen sein. Die Füllmasse 31 kann in den Hohlraum 30 eingespritzt werden, wobei sich der Hohlraum 30 und gegebenenfalls Spalte zwischen den Magneten 9, 10 und den Magnetaufnahmen 6, 7 mit der Füllmasse 31 zumindest teilweise füllen lassen. Hierdurch sind die Magnete 9, 10 zuverlässig in den Magnetaufnahmen 6, 7 fixiert. Außerdem ist auch das freie Polelement 19 zuverlässig fixiert. Dadurch ist es auch möglich, dass die einzelnen Elemente, insbesondere das freie Polelement 19 und die Magnete 9, 10 zur Erleichterung der Herstellung mit gewissen Toleranzen gefertigt werden, da eine zuverlässige Fixierung über die Füllmasse 31 erzielt werden kann.

Außerdem wird durch das Ausspritzen des Hohlraums 30 mit der Füllmasse 31 auch ein Korrosionsschutz und eine Versteifung des Rotors 2 erzielt.

Bei der Herstellung des Rotors 2 kann der Lamellenkörper mit den Magneten 9, 10 in eine rohrförmige Kunststoffspritzform eingefügt und in dieser zentriert positioniert werden. Dann kann die Füllmasse 31 in die Hohlräume 30 eingespritzt werden. Hierbei kann die Füllmasse 31 auch im Bereich der Nasen 22, 23 bis zu der Außenseite 21 des Lamellenkörpers 5 vordringen. Möglich ist es auch, dass die Füllmasse 31 den Lamellenkörper 5 an der Außenseite 21 umschließt.

Somit kann durch das Auffüllen des Hohlraums 30, der in diesem Ausführungsbeispiel zwischen dem innenliegenden Befestigungsbereichs 16 des Grundkörpers 15, den Magneten 9, 10 und dem freien Polelement 19 ausgebildet ist, eine hohe Festigkeit erreicht werden, wobei zugleich eine kostengünstige Herstellung ermöglicht ist. Hierbei können die Magnete 9, 10 zusätzlich in einem außenliegenden Bereich zumindest teilweise von der Füllmasse 31 umgeben sein. Ferner können zwischen dem Lamellenkörper 5 und den Magneten 9, 10 verbleibende Spalte zumindest teilweise mit der Füllmasse 31 aufgefüllt sein.

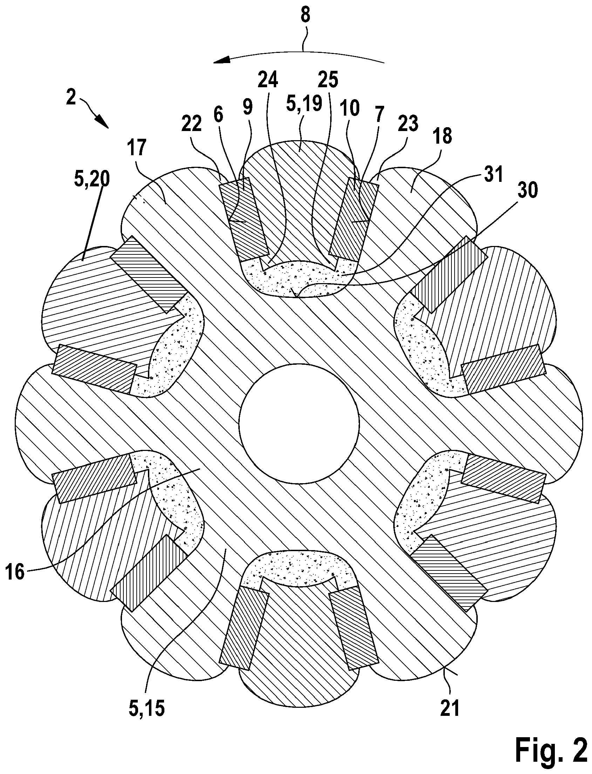

Fig. 2 zeigt den in Fig. 1 dargestellten Rotor 2 der elektrischen Maschine 1 entsprechend einem zweiten nicht zur Erfindung gehörenden Ausführungsbeispiel. In diesem Ausführungsbeispiel sind durch eine Aufweitung des Luftspalts zu den Polkanten hin ein Rastmoment der elektrischen Maschine 1, eine Momentschwankung unter Last sowie eine induzierte Spannungskurve vorteilhaft beeinflusst. Hierbei ist die Oberfläche der einzelnen Pole des Lamellenkörpers 5 an der Außenseite 21, die die Rotoroberfläche bestimmt, zum Erzielen einer Luftspaltaufweitung mit geeigneten Polradien ausgestaltet. Die einzelnen Polradien sind hierbei kleiner gewählt als ein Luftspaltradius, der durch einen Innendurchmesser des Stators 3 gegeben ist. Hierbei können auch andere Ausgestaltungen der Pole zum Einsatz kommen.

Geeignet sind andere Formen wie Sinuspole oder eine 1/cos-Funktion. Einfache Anfasungen an den Polkanten sind ebenfalls möglich. Die Formgebung einer 1/cos-Funktion kann für die Oberflächenkontur an der Außenseite 21 der einzelnen Rotorpole des Rotors 2 zum Einsatz kommen.

In diesem Ausführungsbeispiel sind die Magnete 9, 10 in radialer Richtung orientiert. Allerdings können die Magnete 9, 10 auch parallel zueinander, V-förmig zueinander oder in anderer Weise angeordnet sein.

Durch die Füllmasse 31 in dem Hohlraum 30 ist eine hohe Stabilität des Rotors 2 gewährleistet. Hierbei ist eine genaue Positionierung des freien Polelements 19 in Bezug auf die benachbarten Streben 17, 18 gewährleistet. Hierdurch ist über die Lebensdauer der elektrischen Maschine 1 eine gleich bleibende Rotoroberfläche an der Außenseite 21 gewährleistet. Hierdurch ergibt sich auch ein vorteilhafter Feldlinienverlauf, da ein Verrutschen beispielsweise des freien Polelements 19 in radialer Richtung oder in der Umfangsrichtung 8 verhindert ist. Ferner ist auch ein Verrutschen der Magnete 9, 10 verhindert.

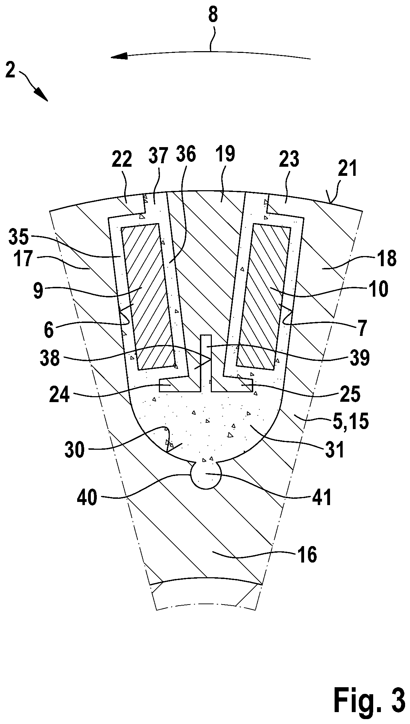

Fig. 3 zeigt den in Fig. 1 mit III bezeichneten Ausschnitt des Rotors 2 der elektrischen Maschine 1 in einer schematischen Darstellung entsprechend einem dritten Ausführungsbeispiel. In diesem Ausführungsbeispiel ist der Hohlraum 30 vollständig mit der Füllmasse 31 aufgefüllt. Ferner sind Spalte 35, 36 zwischen der Magnetaufnahme 6 und dem Magneten 9 mit der Füllmasse 31 aufgefüllt. Außerdem ist ein Teil 37 der Füllmasse 31 im Bereich der Nase 22 vorgesehen. Dadurch ist der Magnet 9 in einem außenliegenden Bereich von der Füllmasse 31 umgeben. Entsprechend ist auch zwischen der Magnetaufnahme 7 und dem Magneten 10 ein verbleibender Freiraum nach der Montage des Magneten 10 mit der Füllmasse 31 aufgefüllt, wobei der Magnet 10 auch in einem äußeren Bereich an der Außenseite 21 von der Füllmasse 31 abgedeckt ist.

In diesem Ausführungsbeispiel weist das freie Polelement 19 eine an den innenliegenden Hohlraum 30 angrenzende Aussparung 38 auf. Beim Einspritzen der Füllmasse 31 in den Hohlraum 30 wird auch die Aussparung 38 mit der Füllmasse 31 aufgefüllt, so dass sich ein Teil 39 der Füllmasse 31 in der Aussparung 38 befindet.

Außerdem weist der innenliegende Befestigungsbereich 16 des Lamellenkörpers 5 eine an den innenliegenden Hohlraum 30 angrenzende Aussparung 40 auf, die beim Einfüllen der Füllmasse 31 in den Hohlraum 30 mit einem Teil 41 der Füllmasse 31 aufgefüllt wird. Hierdurch befindet sich der Teil 41 der Füllmasse 31 in der Aussparung 40. Die mit der Füllmasse 31 aufgefüllten Aussparungen 38, 40 ermöglichen eine weitere Verbesserung der Stabilität des Rotors 2. Speziell wird ein gewisser Formschluss zwischen der erhärteten Füllmasse 31 und dem Lamellenkörper 5 in Bezug auf die freien Polelemente 19, 20 gewährleistet. Hierdurch ist die Stabilität des Rotors 2 weiter verbessert. Die Füllmasse 31 übernimmt hierbei die Funktion einer Halteklammer, die insbesondere das freie Polelement 19 in Bezug auf den mit der Welle 4 verbundenen innenliegenden Befestigungsbereich 16 gewährleistet.

## Patentansprüche

1. Rotor (2) für eine elektrische Maschine mit einem Lamellenkörper (5), der mehrere Magnetaufnahmen (6, 7) aufweist, und mehreren Magneten (9, 10), die in den Magnetaufnahmen (6, 7) des Lamellenkörpers (5) angeordnet und in radialer Richtung orientiert sind, wobei
• der Lamellenkörper (5) einen Grundkörper (15) mit innenliegendem Befestigungsbereich (16) und Streben (17, 18) aufweist, wobei die Streben (17, 18) sich in radialer Richtung () erstrecken,
• der Lamellenkörper (5) freie Polelemente (19, 20) zwischen zwei benachbarten Streben (17, 18) aufweist, und
• die Magnetaufnahmen (6, 7) zwischen einer Strebe (17, 18) und einem freien Polelement (19, 20) angeordnet sind,
• wobei der Lamellenkörper (5) an dem innenliegenden Befestigungsbereich (16) zumindest mittelbar mit einer Welle (4) verbindbar ist, und dass zwischen dem innenliegenden Befestigungsbereich (16) und zumindest einem Magneten (9, 10) ein innenliegender Hohlraum (30) ausgebildet ist, wobei an den innen liegenden Hohlraum (30) zwei Magnetaufnahmen (6, 7) angrenzen, in denen jeweils ein Magnet (9, 10) angeordnet ist, und dass die Magnetaufnahmen (6,7) durch ein freies Polelement (19) des Lamellenkörpers (5) voneinander beabstandet sind,
**dadurch gekennzeichnet, dass**
der innenliegende Hohlraum (30) zumindest im Wesentlichen mit einer Füllmasse (31) aufgefüllt ist, und die zwischen dem Lamellenkörper (5) und den Magneten (9, 10) gebildete Hohlräume (30) zumindest teilweise mit zumindest der Füllmasse (31) aufgefüllt sind, wobei zwischen dem Lamellenkörper (5) und den Magneten (9, 10) verbleibende radiale Spalte (35, 36) zumindest teilweise mit der Füllmasse (31) aufgefüllt sind, wodurch die Magnete (9, 10) und das freie Polelement (19) zuverlässig über die Füllmasse (31) fixiert sind.

2. Rotor nach Anspruch 1, **dadurch gekennzeichnet, dass** die Füllmasse (31) zum Auffüllen der Hohlräume (30) in die Hohlräume (30) eingespritzt ist.

3. Rotor nach Anspruch 1 oder 2, **dadurch gekennzeichnet, dass** die Füllmasse (31) auf zumindest einem Kunststoff basiert.

4. Rotor nach einem der Ansprüche 1 bis 3, **dadurch gekennzeichnet, dass** die Füllmasse (31) auf zumindest einem hochfesten Kunststoff basiert und/oder dass die Füllmasse (31) zumindest eine Glasbeimengung aufweist.

5. Rotor nach Anspruch 1, **dadurch gekennzeichnet, dass** das freie Polelement (19) innenliegende Absätze (24, 25) aufweist, die die Magnete (9, 10) innen hintergreifen.

6. Rotor nach Anspruch 1 oder 6, **dadurch gekennzeichnet, dass** das freie Polelement (19) eine an den innenliegenden Hohlraum (30) angrenzende Aussparung (38) aufweist und dass die Aussparung (38) des freien Polelements (19) zumindest im Wesentlichen mit der Füllmasse (31) aufgefüllt ist.

7. Rotor nach einem der Ansprüche 1 oder 7 bis 8, **dadurch gekennzeichnet, dass** der innenliegende Befestigungsbereich (16) eine an den innenliegenden Hohlraum (30) angrenzende Aussparung (40) aufweist und dass die Aussparung (40) des innenliegenden Befestigungsbereichs (16) zumindest im Wesentlichen mit der Füllmasse (31) aufgefüllt ist.

8. Rotor nach einem der Ansprüche 1 bis 7, **dadurch gekennzeichnet, dass** die Magnete (9, 10) in einem außen liegenden Bereich zumindest teilweise von der Füllmasse (31) umgeben sind.

9. Elektrische Maschine (1), insbesondere Elektromotor, mit einem Stator (3) und einem innerhalb des Stators (3) angeordneten Rotor (2) nach einem der Ansprüche 1 bis 8.

## Claims

1. Rotor (2) for an electrical machine, comprising a lamination body (5) which has a plurality of magnet receptacles (6, 7), and a plurality of magnets (9, 10) which are arranged in the magnet receptacles (6, 7) of the lamination body (5) and are oriented in the radial direction, wherein
• the lamination body (5) has a main body (15) with an internal fastening region (16) and struts (17, 18), wherein the struts (17, 18) extend in the radial direction (),
• the lamination body (5) has free pole elements (19, 20) between two adjacent struts (17, 18), and
• the magnet receptacles (6, 7) are arranged between a strut (17, 18) and a free pole element (19, 20),
• wherein the lamination body (5) can be at least indirectly connected to a shaft (4) at the internal fastening region (16), and that an internal cavity (30) is formed between the internal fastening region (16) and at least one magnet (9, 10), wherein two magnet receptacles (6, 7) adjoin the internal cavity (30), in each case one magnet (9, 10) being arranged in each of the said two magnet receptacles, and that the magnet receptacles (6, 7) are spaced apart from one another by a free pole element (19) of the lamination body (5),
**characterized in that**
the internal cavity (30) is at least substantially filled with a filling compound (31), and the cavities (30) which are formed between the lamination body (5) and the magnets (9, 10) are at least partially filled with at least the filling compound (31), wherein radial gaps (35, 36) which remain between the lamination body (5) and the magnets (9, 10) are at least partially filled with the filling compound (31), as a result of which the magnets (9, 10) and the free pole element (19) are reliably fixed by means of the filling compound (31).

2. Rotor according to Claim 1, **characterized in that** the filling compound (31) is injected into the cavities (30) for the purpose of filling the cavities (30).

3. Rotor according to Claim 1 or 2, **characterized in that** the filling compound (31) is based on at least one plastic.

4. Rotor according to one of Claims 1 to 3, **characterized in that** the filling compound (31) is based on at least one high-strength plastic, and/or **in that** the filling compound (31) has at least one glass addition.

5. Rotor according to Claim 1, **characterized in that** the free pole element (19) has internal projections (24, 25) which engage behind the magnets (9, 10) on the inside.

6. Rotor according to Claim 1 or 6, **characterized in that** the free pole element (19) has a cutout (38) which adjoins the internal cavity (30), and **in that** the cutout (38) of the free pole element (19) is at least substantially filled with the filling compound (31).

7. Rotor according to one of Claims 1 or 7 to 8, **characterized in that** the internal fastening region (16) has a cutout (40) which adjoins the internal cavity (30), and **in that** the cutout (40) of the internal fastening region (16) is at least substantially filled with the filling compound (31).

8. Rotor according to one of Claims 1 to 7, **characterized in that** the magnets (9, 10) are at least partially surrounded by the filling compound (31) in an external region.

9. Electrical machine (1), in particular electric motor, comprising a stator (3) and a rotor (2) according to one of Claims 1 to 8 which is arranged within the stator (3).

## Revendications

1. Rotor (2) pour une machine électrique avec un corps feuilleté (5), qui présente plusieurs logements d'aimant (6, 7), et plusieurs aimants (9, 10), qui sont disposés dans les logements d'aimant (6, 7) du corps feuilleté (5) et orientés en direction radiale, dans lequel
• le corps feuilleté (5) présente un corps de base (15) avec une zone de fixation interne (16) et des entretoises (17, 18), dans lequel les entretoises (17, 18) s'étendent en direction radiale (),
• le corps feuilleté (5) présente des éléments polaires libres (19, 20) entre deux entretoises voisines (17, 18), et
• les logements d'aimant (6, 7) sont disposés entre une entretoise (17, 18) et un élément polaire libre (19, 20),
• dans lequel le corps feuilleté (5) peut être assemblé dans la zone de fixation interne (16) au moins indirectement à un arbre (4), et qu'une cavité interne (30) est formée entre la zone de fixation interne (16) et au moins un aimant (9, 10), dans lequel deux logements d'aimant (6, 7) sont adjacents à la cavité interne (30), dans lesquels est chaque fois disposé un aimant (9, 10), et les logements d'aimant (6, 7) sont espacés l'un de l'autre par un élément polaire libre (19) du corps feuilleté (5),
**caractérisé en ce que** la cavité interne (30) est au moins essentiellement remplie avec une masse de remplissage (31), et les cavités (30) formées entre le corps feuilleté (5) et les aimants (9, 10) sont au moins en partie remplies au moins avec la masse de remplissage (31), dans lequel des fentes radiales (35, 36) subsistant entre le corps feuilleté (5) et les aimants (9, 10) sont au moins en partie remplies avec la masse de remplissage (31), les aimants (9, 10) et l'élément polaire libre (19) étant ainsi fixés de façon fiable par la masse de remplissage (31).

2. Rotor selon la revendication 1, **caractérisé en ce que** la masse de remplissage (31) destinée à remplir les cavités (30) est injectée dans les cavités (30).

3. Rotor selon une revendication 1 ou 2, **caractérisé en ce que** la masse de remplissage (31) est basée sur au moins une matière plastique.

4. Rotor selon l'une quelconque des revendications 1 à 3, **caractérisé en ce que** la masse de remplissage (31) est basée sur au moins une matière plastique à haute résistance et/ou **en ce que** la masse de remplissage (31) présente au moins un ajout de verre.

5. Rotor selon la revendication 1, **caractérisé en ce que** l'élément polaire libre (19) présente des épaulements internes (24, 25), qui accrochent intérieurement les aimants (9, 10) à l'arrière.

6. Rotor selon une revendication 1 ou 6, **caractérisé en ce que** l'élément polaire libre (19) présente une découpe (38) adjacente à la cavité interne (30) et **en ce que** la découpe (38) de l'élément polaire libre (19) est au moins essentiellement remplie avec la masse de remplissage (31).

7. Rotor selon l'une quelconque des revendications 1 ou 7 à 8, **caractérisé en ce que** la zone de fixation interne (16) présente une découpe (40) adjacente à la cavité interne (30) et **en ce que** la découpe (40) de la zone de fixation interne (16) est au moins essentiellement remplie avec la masse de remplissage (31) .

8. Rotor selon l'une quelconque des revendications 1 à 7, **caractérisé en ce que** les aimants (9, 10) sont au moins essentiellement entourés par la masse de remplissage (31) dans une région située à l'extérieur.

9. Machine électrique (1), en particulier moteur électrique, comportant un stator (3) et un rotor (2) selon l'une quelconque des revendications 1 à 8 disposé à l'intérieur du stator (3).
